# FASCICULE DE BREVET EUROPEEN

(11) **EP 2 208 448 B1**
(45) Date de publication et mention de la délivrance du brevet: **19.02.2014**
(21) Numéro de dépôt: 10305041.5
(22) Date de dépôt: 14.01.2010
(51) Int. Cl.: A47J 27/08

(54) **Appareil de cuisson à cuisson séquentielle, système et procédé afférents**
Kochgerät mit abwechselnder Anwendung, System und Verfahren
Cooking appliance for sequential cooking, system and process

(30) Priorité: 15.01.2009 FR 0950239
(43) Date de publication de la demande: 21.07.2010
(73) Titulaire: SEB S.A., 69130 Ecully (FR)
(72) Inventeur: Baraille, Eric, Laurent, 21121 Fontaine-lès-Dijon (FR); Cohade, Guillaume, 21000 Dijon (FR); Murat, Marie-Pierre, 21121 Fontaine-lès-Dijon (FR)
(74) Mandataire: Weber, Jean-François

(56) Documents cités:
- EP-A- 2 002 765
- DE-A1- 2 910 789
- DE-A1- 19 700 602

## Description

La présente invention se rapporte au domaine technique général des appareils de cuisson domestiques, et en particulier au secteur des autocuiseurs, c'est-à-dire des appareils de cuisson sous pression destinés à assurer la cuisson sous pression de vapeur des aliments contenus en leur sein.

La présente invention concerne plus particulièrement un appareil de cuisson d'aliments par soumission de ces derniers à une source de chauffe.

La présente invention concerne également un système de cuisson d'aliments comprenant d'une part un appareil de cuisson d'aliments et d'autre part un livret de recettes indiquant, pour au moins un aliment, une durée de cuisson.

La présente invention concerne enfin un procédé de cuisson d'aliments par soumission de ces derniers à une source de chauffe.

Les autocuiseurs domestiques sont bien connus. Ils comprennent habituellement une cuve destinée à accueillir les aliments et un couvercle destiné à être rapporté et verrouillé sur la cuve pour former avec cette dernière une enceinte de cuisson étanche.

Un tel autocuiseur est classiquement destiné à être soumis à l'influence d'une source de chauffe (comme par exemple une plaque de cuisson) de manière à permettre la montée en pression et en température de l'enceinte, et ainsi la cuisson sous pression de vapeur des aliments contenus dans cette dernière.

La cuisson en autocuiseur présente un certain nombre d'avantages nutritionnels et organoleptiques par rapport à d'autres modes de cuisson n'impliquant pas de montée en pression. Ainsi, la cuisson à la vapeur sous pression permet d'atteindre des températures supérieures à 100°C, ce qui autorise une cuisson particulièrement rapide, tout en préservant cependant la plupart des qualités nutritionnelles des aliments. Par exemple, une cuisson de haricots verts nécessite en moyenne huit minutes sous pression dans un autocuiseur performant contre trente minutes dans une simple casserole à pression atmosphérique. De nombreuses études scientifiques menées jusqu'à ce jour démontrent en outre une préservation de la vitamine C dans les légumes qui est bien meilleure lors d'une cuisson en autocuiseur que lors d'une cuisson dans une simple casserole par exemple.

En définitive, la cuisson en autocuiseur s'avère généralement plus rapide, mais également plus respectueuse des propriétés nutritionnelles et organoleptiques des aliments qui y sont soumis.

Cependant, dans le cas d'aliments volumineux, comme des morceaux de viande, du poisson ou des pommes de terre, le coeur de l'aliment présente un retard à la cuisson, c'est-à-dire que le coeur de l'aliment ne commence à cuire réellement que plusieurs minutes après les couches superficielles de l'aliment. Ceci est dû au fait que comme dans tous les appareils de cuisson (à l'exception notable des fours à micro-ondes), l'apport thermique se fait par l'extérieur de l'aliment.

Par conséquent, quand l'extérieur (c'est-à-dire les couches superficielles) de l'aliment est cuit, le coeur de l'aliment ne l'est pas encore et la chaleur régnant au sein de l'enceinte de cuisson participe alors autant à une surcuisson des couches extérieures de l'aliment qu'à une cuisson du coeur de l'aliment. Les couches superficielles sont donc surcuites, et perdent de ce fait certaines de leurs qualités nutritionnelles et organoleptiques.

En outre, la quantité d'énergie utilisée pour cette surcuisson est gaspillée, puisqu'une telle surcuisson n'est bien entendu par recherchée et doit être au contraire évitée.

Cette surcuisson des couches extérieures des aliments, en particulier lorsque ces derniers sont volumineux, constitue donc un inconvénient sérieux qui détourne certains utilisateurs de l'utilisation d'un autocuiseur pour cuire les aliments en question.

En outre, le temps de cuisson optimal d'un aliment en autocuiseur doit être connu et respecté scrupuleusement, dans la mesure où quelques minutes de cuisson superflues peuvent aggraver le phénomène de surcuisson évoqué précédemment au point de détériorer fortement les aliments (par exemple les viandes deviennent dures et sèches), voire même détruire les aliments (les pommes de terre peuvent éclater ou être réduites en bouillie).

Le document DE-29 10 789 divulgue un appareil conforme au préambule de la revendication 1.

Les objets assignés à l'invention visent en conséquence à porter remède aux différents inconvénients énumérés précédemment et à proposer un nouvel appareil de cuisson qui permet d'optimiser le cycle de cuisson, et en particulier de réduire le risque de surcuisson, d'économiser de l'énergie, tout en étant particulièrement simple et intuitif à utiliser.

Un autre objet de l'invention vise à proposer un nouvel appareil de cuisson d'aliments, et en particulier un autocuiseur, qui permet une cuisson extrêmement rapide, particulièrement respectueuse des qualités nutritionnelles et organoleptiques des aliments et qui n'est pas perçue comme étant anxiogène par l'utilisateur et évite à ce dernier d'avoir à subir un temps d'attente important pour accéder aux aliments à la fin de la cuisson.

Un autre objet de l'invention vise à proposer un nouvel appareil de cuisson d'aliments qui est extrêmement simple et intuitif à utiliser, et dont la conception limite les erreurs d'utilisation.

Un autre objet de l'invention vise à proposer un nouveau système de cuisson d'aliments particulièrement simple et intuitif, qui ne modifie pas les habitudes de l'utilisateur.

Un autre objet de l'invention vise enfin à proposer un nouveau procédé de cuisson d'aliments qui permet une cuisson optimale des aliments, en limitant le risque de surcuisson, tout en autorisant une économie d'énergie.

Les objets assignés à l'invention sont atteints à l'aide d'un appareil de cuisson d'aliments par soumission de ces derniers à une source de chauffe, ledit appareil étant caractérisé en ce qu'il comporte un dispositif de gestion de la cuisson conçu pour émettre d'une part un premier signal destiné soit à commander la coupure de la source de chauffe soit à inviter l'utilisateur à couper la source de chauffe et d'autre part un deuxième signal qui est postérieur audit premier signal et qui indique à l'utilisateur la fin de la cuisson.

Les objets assignés à l'invention sont également atteints à l'aide d'un système de cuisson d'aliments comprenant :
- d'une part un appareil de cuisson d'aliments par soumission de ces derniers à une source de chauffe, ledit appareil comportant un dispositif de gestion de la cuisson conçu pour émettre d'une part un premier signal destiné soit à commander la coupure de la source de chauffe soit à inviter l'utilisateur à couper la source de chauffe et d'autre part un deuxième signal qui est postérieur audit premier signal et qui indique à l'utilisateur la fin de la cuisson, ledit dispositif de gestion de la cuisson comprenant un moyen de détection de l'atteinte d'une valeur prédéterminée de pression au sein de l'enceinte, ledit dispositif de gestion de la cuisson étant conçu pour émettre un quatrième signal qui est antérieur au premier signal et qui est destiné soit à commander la diminution de la puissance de la source de chauffe soit à inviter l'utilisateur à diminuer la puissance de la source de chauffe, ledit appareil comprenant en outre un moyen de paramétrage permettant à l'utilisateur de régler au moins la durée s'écoulant entre le quatrième signal et le premier signal.
- et d'autre part un livret de recettes indiquant, pour au moins un aliment, une durée de cuisson, ladite durée de cuisson indiquée sur le livret de recettes correspondant à la durée s'écoulant entre le quatrième signal et le premier signal.

Les objets assignés à l'invention sont également atteints à l'aide d'un procédé conforme à l'objet de la revendication 10.

D'autres objets, caractéristiques et avantages de l'invention apparaîtront plus en détails à la lecture de la description qui suit, en référence aux dessins annexés, donnés à titre d'exemple illustratif et non limitatif, dans lesquels :
- La figure 1 illustre, selon une vue schématique en perspective, un appareil de cuisson d'aliments sous pression conforme à l'invention, ledit appareil étant pourvu d'un organe de sélection de pression mobile entre cinq positions, savoir une position de décompression et quatre positions de cuisson, ledit organe de sélection de pression se trouvant dans sa position de décompression.
- La figure 2 illustre, selon une vue de dessus, l'appareil de la figure 1 avec son dispositif de gestion de la cuisson hors service, c'est-à-dire non alimenté électriquement.
- La figure 3 illustre, selon une vue de dessus, un détail de la figure 2, l'organe de sélection de pression se trouvant dans une position de cuisson spécialement adaptée à la cuisson de poisson, le dispositif de gestion de la cuisson étant quant à lui activé et prêt à être programmé par l'utilisateur.
- La figure 4 illustre, selon une vue de dessus, le détail de la figure 3, l'organe de sélection de pression étant en position de décompression, tandis qu'une durée de cuisson d'une minute a été programmée par l'utilisateur sur le dispositif de gestion.
- La figure 5 illustre, selon une vue de dessus, un détail de la vue de la figure 2, l'organe de sélection de pression étant en position de décompression, tandis que le dispositif de gestion émet un signal d'erreur.
- La figure 6 illustre, selon une vue de dessus, le détail de la figure 3, un temps de cuisson d'une minute étant programmé sur le dispositif de gestion de la cuisson et affiché par ce dernier.
- La figure 7 illustre, selon une vue de dessus, un détail de la figure 6, le dispositif de gestion de la cuisson étant en train de décompter la durée de cuisson de programmée par l'utilisateur.
- La figure 8 illustre, selon une vue de dessus, le détail de la figure 6 à l'instant où la durée de cuisson a été entièrement décomptée, le dispositif de gestion de la cuisson émettant un premier et un troisième signal invitant respectivement l'utilisateur à couper la source de chauffe et à activer la décompression de l'appareil.
- La figure 9 illustre, selon une vue de dessus, un détail de la figure 8, l'organe de sélection de pression étant en position de décompression, conformément à l'invitation qui avait été signifiée à l'utilisateur (cf. figure 8), le dispositif de gestion de la cuisson décomptant une durée additionnelle de cuisson et affichant ledit décompte.
- La figure 10 illustre, selon une vue de dessus, un détail de l'appareil conforme à l'invention, le dispositif de gestion de la cuisson émettant un deuxième signal indiquant à l'utilisateur la fin de la cuisson.
- La figure 11 est un graphe illustrant le déroulement d'un procédé de cuisson conforme à l'art antérieur.
- La figure 12 est un graphe illustrant le déroulement d'un procédé de cuisson conforme à l'invention.
- La figure 13 est un graphe illustrant le gain en matière de préservation des vitamines B6 obtenues grâce à un procédé de cuisson conforme à l'invention, en regard d'un procédé de cuisson conforme à l'art antérieur.
- La figure 14 est un graphe illustrant le gain en matière de tendreté obtenue à l'aide d'un procédé de cuisson sous pression conforme à l'invention, par rapport à un procédé de cuisson sous pression conforme à l'art antérieur.

L'invention concerne un appareil 1 de cuisson par soumission de ce dernier à une source de chauffe (non représentée aux figures). Plus précisément, l'appareil 1 de cuisson illustré aux figures est destiné d'une part à contenir les aliments à cuire et d'autre part à être soumis à une source de chauffe externe, indépendante de l'appareil 1, de manière à permettre une augmentation de la température à l'intérieur de l'appareil 1 entraînant la cuisson des aliments contenus dans ce dernier. L'appareil 1 de cuisson constitue dans ce cas un appareil thermiquement passif, conçu pour s'échauffer sous l'effet d'une source de chauffe indépendante qui lui est extérieure, du genre plaque de cuisson. Il est cependant tout à fait envisageable, sans pour autant que l'on sorte du cadre de l'invention, que l'appareil de cuisson d'aliments incorpore une source de chauffe, cette source de chauffe embarquée apportant l'énergie thermique nécessaire pour cuire les aliments.

Dans le mode de réalisation illustré aux figures, l'appareil 1 est un autocuiseur, c'est-à-dire qu'il permet de cuire les aliments sous pression de vapeur, à haute température. L'invention n'est toutefois pas limitée à un appareil de cuisson d'aliments sous pression, et peut également concerner un appareil de cuisson assurant la cuisson des aliments sensiblement à pression atmosphérique.

L'appareil 1 est donc avantageusement conçu pour former une enceinte de cuisson permettant la cuisson sous pression des aliments. En d'autres termes, l'enceinte de cuisson en question est suffisamment étanche pour permettre à la pression régnant en son sein d'excéder sensiblement la pression atmosphérique lorsque l'enceinte de cuisson est soumise à la puissance thermique d'une source de chauffe, telle qu'une plaque de cuisson. L'enceinte de cuisson peut être de toute construction connue de l'homme du métier. Avantageusement, et comme cela est bien connu en tant que tel, l'appareil 1 conforme à l'invention comprend d'une part une cuve 2, réalisée en un matériau métallique, et formant un récipient de cuisson destiné à accueillir en son sein les aliments à cuire et d'autre part un couvercle 3 destiné à être rapporté et verrouillé sur la cuve 2 pour former avec cette dernière l'enceinte de cuisson. Avantageusement, le couvercle 3 est conçu pour être verrouillé ou déverrouillé à volonté sur la cuve 2, le verrouillage du couvercle 3 permettant à l'enceinte de monter en pression sans échappement intempestif du couvercle 3 sous l'effet de l'augmentation de pression au sein de l'enceinte. A cette fin, l'autocuiseur 1 comprend préférentiellement un moyen de verrouillage/déverrouillage 4 du couvercle 3 sur la cuve 2. Le moyen de verrouillage/déverrouillage 4 peut être de tout type connu de l'homme du métier, et par exemple, comme illustré aux figures, constitué par des mâchoires destinées à enserrer les bords périphériques de la cuve 2 et du couvercle 3, lesdites mâchoires étant montées à coulissement radial sur le couvercle 3.

Avantageusement, l'appareil 1 comprend un moyen de régulation 5 de la valeur de la pression régnant dans l'enceinte de cuisson pour maintenir ladite pression à une valeur de consigne. Un tel moyen de régulation 5 est bien connu en tant que tel, et de préférence constitué par une soupape de régulation de pression sensible à la pression régnant dans l'enceinte de cuisson et montée mobile entre :
- d'une part une position de fermeture étanche, dans laquelle elle ferme la communication de l'enceinte avec l'extérieur tant que la pression interne est inférieure ou égale à la valeur de consigne,
- et d'autre part une position de fuite, dans laquelle elle met en communication l'intérieur de l'enceinte avec l'extérieur, de préférence par une sortie 5A de vapeur, dès que la pression régnant dans l'enceinte excède sensiblement la valeur de consigne.

La soupape de régulation pourra être de tout type connu de l'homme du métier, et être par exemple constituée par une soupape à ressort de compression montée mobile dans un puits entre :
- une position basse dans laquelle elle repose, sous l'effet de la force de rappel exercée par le ressort de compression, contre le couvercle 3 en regard d'un perçage ménagé à-travers ce dernier et communiquant avec la sortie de vapeur 5A ; dans cette position stable de butée, qui est une position de rappel, la soupape obture de façon étanche le perçage ménagé à-travers le couvercle 3 pour empêcher toute fuite de vapeur à-travers ledit perçage puis la sortie de vapeur 5A ;
- et au moins une position haute que la soupape occupe sous l'effet de la pression régnant dans l'enceinte, lorsque cette dernière dépasse la valeur de consigne et exerce de ce fait sur la soupape une force opposée et supérieure à la force de rappel exercée par le ressort de compression. Dans cette position haute, la soupape s'élève et dégage le perçage ménagé à-travers le couvercle, à travers lequel la vapeur peut dès lors s'échapper vers l'extérieur, via la sortie de vapeur 5A.

Avantageusement, et tel que cela est bien connu de l'homme du métier, l'appareil 1 comprend également un organe de sélection de pression 6 permettant à l'utilisateur de régler la valeur de consigne du moyen de régulation 5 de la valeur de la pression régnant dans l'enceinte de cuisson.

En d'autres termes, l'organe de sélection de pression 6 permet à l'utilisateur de sélectionner une valeur de consigne parmi plusieurs valeurs de consigne prédéterminées, pour adapter la pression de cuisson, régulée par le moyen de régulation 5, à la nature des aliments à cuire. De façon préférentielle, afin de permettre à l'utilisateur de régler la valeur de consigne, la soupape de régulation de pression, constituant préférentiellement le moyen de régulation 5 de la valeur de la pression régnant dans l'enceinte de cuisson, est munie d'un système de tarage, constitué par exemple par un dispositif permettant de comprimer plus ou moins le ressort de compression rappelant la soupape dans sa position basse d'étanchéité. Dans ce cas, bien connu de l'homme du métier, l'organe de sélection de pression 6 permet à l'utilisateur d'agir sur l'intensité de la force de rappel exercée par le ressort de compression sur la soupape de régulation, en comprimant plus ou moins, selon la position de l'organe de sélection de pression 6, le ressort de compression auquel est soumise la soupape de régulation. L'utilisateur peut ainsi sélectionner une valeur de consigne parmi un choix de plusieurs valeurs de consigne, et par exemple, comme illustré aux figures, parmi quatre valeurs de consigne qui seront détaillées ci-après. Avantageusement, l'appareil 1 comprend également un organe de décompression de l'enceinte de cuisson, ledit organe de décompression étant conçu pour, lorsqu'il est activé, ramener ou maintenir la pression régnant dans l'enceinte de cuisson à une valeur compatible avec un déverrouillage sécurisé du couvercle 3, sans risque de voir ce dernier échapper brutalement sous l'effet de la pression. En d'autres termes, l'organe de décompression permet de mettre en communication forcée l'intérieur de l'enceinte avec l'extérieur, pour empêcher la montée en pression de l'enceinte ou au contraire établir une fuite de vapeur suffisante pour ramener le niveau de pression régnant dans l'enceinte à un niveau suffisamment bas pour permettre le déverrouillage du couvercle 3 et sa séparation d'avec la cuve 2.

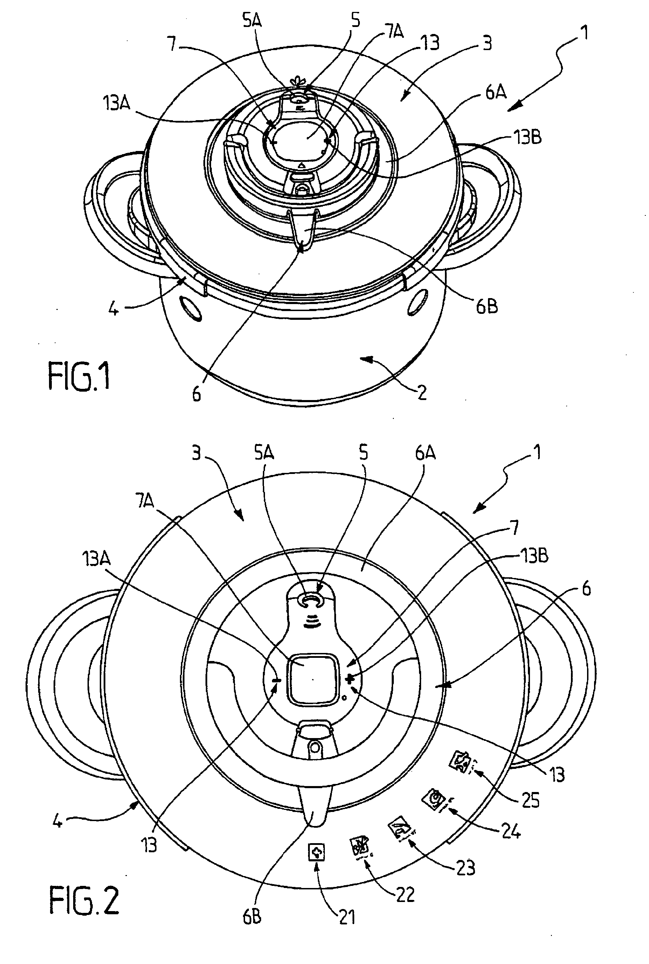

Avantageusement, l'organe de sélection de pression 6, tout comme l'organe de décompression, sont destinés à être actionnés manuellement par l'utilisateur. De préférence, l'organe de sélection de pression 6 et l'organe de décompression sont constitués par une seule et même pièce, qui permet à la fois d'agir sur le tarage de la soupape de régulation pour choisir une valeur de pression de cuisson et d'agir sur la soupape elle-même pour la forcer à quitter sa position d'étanchéité et ainsi générer la décompression de l'enceinte de cuisson. Avantageusement, l'organe de sélection de pression 6, qui constitue également l'organe de décompression, comprend une couronne rotative 6A montée à rotation sur le couvercle 3 entre :
- une position d'ouverture (également appelée position de décompression), illustrée aux figures 1, 2, 4, 5, 9 et 10, permettant de ramener ou de maintenir la pression régnant dans l'enceinte de cuisson formée par la cuve 2 et le couvercle 3 à une valeur compatible avec un déverrouillage sécurisé du couvercle 3, la couronne 6A interagissant avec la soupape pour soulever cette dernière afin de mettre en communication permanente et forcée l'intérieur de l'enceinte de cuisson avec l'extérieur, selon une section de fuite suffisante pour non seulement dépressuriser l'appareil 1 mais également l'empêcher de monter en pression au-delà d'une pression de sécurité prédéterminée compatible avec le déverrouillage sécurisé du couvercle 3 ;
- une première position de cuisson, correspondant à un premier tarage prédéterminé de la soupape de régulation, dans laquelle la couronne 6A interagit avec le système de tarage de la soupape, et par exemple avec le ressort de compression auquel est soumise la soupape, pour fixer la valeur de consigne à une première valeur prédéterminée, par exemple spécifiquement adaptée à la cuisson de légumes ;
- une deuxième position de cuisson, correspondant à un deuxième tarage prédéterminé de la soupape de régulation, dans laquelle la couronne 6A interagit avec le système de tarage de la soupape, et par exemple avec le ressort de compression auquel est soumise la soupape, pour fixer la valeur de consigne à une deuxième valeur prédéterminée, par exemple spécifiquement adaptée à la cuisson de féculents (pommes de terre par exemple) ;
- une troisième position de cuisson, correspondant à un troisième tarage prédéterminé de la soupape de régulation, dans laquelle la couronne 6A interagit avec le système de tarage de la soupape, et par exemple avec le ressort de compression auquel est soumise la soupape, pour fixer la valeur de consigne à une troisième valeur prédéterminée, par exemple spécifiquement adaptée à la cuisson de viandes ;
- et une quatrième position de cuisson, correspondant à un quatrième tarage prédéterminé de la soupape de régulation, dans laquelle la couronne 6A interagit avec le système de tarage de la soupape, et par exemple avec le ressort de compression auquel est soumise la soupape, pour fixer la valeur de consigne à une quatrième valeur prédéterminée, par exemple spécifiquement adaptée à la cuisson de poissons.

Chacune de ces cinq positions précitées est avantageusement repérée par une icône respective 21, 22, 23, 24, 25 disposée sur le couvercle 3 et destinée à se trouver en regard du doigt 6B lorsque la position correspondante est sélectionnée par l'utilisateur. Une telle interaction entre d'une part un organe de sélection de pression 6 permettant d'agir sur le niveau de pression dans l'enceinte et d'autre part un moyen de régulation 5 et son système de tarage est parfaitement connue en tant que telle, et ne sera donc pas décrite plus avant ici.

A titre indicatif, une telle interaction entre l'organe de sélection de pression 6, le moyen de régulation 5 et son système de tarage peut être par exemple conforme à l'enseignement de la demande de brevet français publiée sous le numéro FR-2 899 454 (déposée sous le numéro FR-06 03207), l'organe de sélection de pression 6 décrit ici correspondant au sélecteur rotatif 37 et à sa pièce de commande 28 décrits dans le document FR-2 899 454 en question. Afin de permettre à l'utilisateur de manipuler aisément la couronne rotative 6A formant organe de sélection de pression et organe de décompression, ladite couronne 6A est pourvue d'un doigt de préhension 6B qui lui est attaché, et que l'utilisateur peut saisir manuellement pour entraîner en rotation la couronne 6A entre ses cinq positions précitées, correspondant respectivement à une position d'ouverture (décompression) et quatre positions qui se distinguent par leur niveau prédéterminé de pression régulé.

Conformément à l'invention, l'appareil 1 comporte en outre un dispositif de gestion 7 de la cuisson conçu pour émettre d'une part un premier signal 8 destiné à inviter l'utilisateur à couper la source de chauffe et d'autre part un deuxième signal 9, qui est postérieur audit premier signal, et qui indique à l'utilisateur la fin de la cuisson. Le premier signal 8 est donc émis à l'attention de l'utilisateur pour inciter ce dernier à couper, de préférence immédiatement et directement, la source de chauffe, c'est-à-dire à éteindre la source de chauffe en question. A ce titre, le premier signal 8 est donc, dans le mode de réalisation exposé ci-avant, perceptible, de préférence directement, par l'utilisateur. Par exemple, dans le cas où la source de chauffe est constituée par une plaque de cuisson électrique, la coupure de la source de chauffe correspond à l'interruption de l'alimentation en électricité de la résistance (ou du système inductif ou vitrocéramique) de la plaque.

Dans le cas d'une plaque de cuisson au gaz, la coupure de la source de chauffe correspond dans ce cas à l'interruption de l'alimentation en gaz du brûleur de la plaque. Ainsi, la coupure de la source de chauffe permet d'interrompre toute consommation énergétique par la source de chauffe. Le terme « *coupure* » ne désigne donc pas une simple réduction de la puissance de chauffe mais bel et bien une interruption totale de consommation énergétique par la source de chauffe. Une telle coupure de la source de chauffe contribue grandement à la simplicité d'utilisation, l'utilisateur n'ayant pas à effectuer d'opération potentiellement complexe d'ajustement du niveau de chauffe. Bien entendu, la coupure de la source de chauffe n'entraîne pas nécessairement immédiatement l'absence de tout flux d'énergie thermique de la source de chauffe vers l'appareil 1 de cuisson, compte-tenu d'éventuels effets d'inertie thermique, en particulier dans le cas d'une source de chauffe constituée par une plaque de cuisson électrique basée sur l'effet Joule.

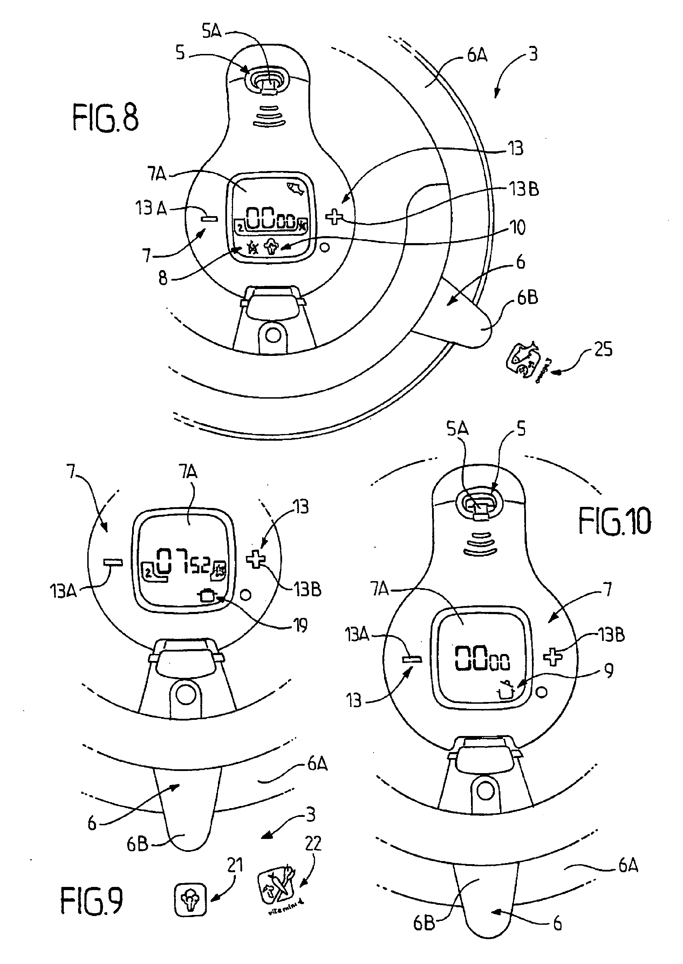

Comme illustré à la figure 8, le premier signal 8 est avantageusement de nature visuelle, et comprend par exemple une icône symbolisant une flamme barrée d'une croix, permettant à l'utilisateur de comprendre qu'il doit couper la source de chauffe en réponse au signal en question. Il est bien entendu également envisageable que le premier signal 8 ne soit pas de nature visuelle mais soit plutôt de nature sonore, et soit constitué dans ce cas par un motif sonore conçu pour attirer l'attention de l'utilisateur. De manière préférée, le premier signal 8 est de nature audiovisuelle, c'est-à-dire qu'il combine l'affichage d'une icône et la production d'un son, le son permettant d'attirer l'attention de l'utilisateur tandis que l'icône permet, par son caractère figuratif, de faire comprendre à l'utilisateur ce qui est attendu de lui, savoir en l'espèce la coupure de la source de chauffe.

Le premier signal 8 n'est donc pas conçu pour simplement refléter un état instantané de l'appareil 1 mais plutôt pour véritablement inciter l'utilisateur à entreprendre rapidement une action positive de coupure totale de l'alimentation de la source de chauffe en énergie ou combustible (électrique, gaz, etc.).

Dans un exemple de réalisation, l'appareil 1 peut être associé à une notice d'utilisation (mode d'emploi) se présentant par exemple sous la forme d'une brochure en papier, ladite notice indiquant à l'utilisateur quelle est la signification du premier signal 8. L'invention concerne d'ailleurs en tant que tel un système comprenant d'une part un appareil de cuisson 1 conforme à la présente description et d'autre part une notice d'utilisation, par exemple sous forme de livret, expliquant à l'utilisateur la signification du premier signal 8 et/ou celle des autres signaux émis à l'attention de l'utilisateur et envisagés dans ce qui suit et ce qui précède.

Le deuxième signal 9 peut également présenter une nature uniquement visuelle, ou uniquement sonore, mais présente avantageusement, à l'instar du premier signal 8, une nature audiovisuelle. Ainsi, le deuxième signal 9 comprend avantageusement une icône représentant, comme illustré à la figure 10, un récipient dont le couvercle est soulevé, afin de signifier à l'utilisateur qu'il peut ouvrir le couvercle et récupérer les aliments, dans la mesure où le cycle de cuisson est terminé. L'affichage de cette icône s'accompagne avantageusement de la production d'un son destiné à attirer l'attention de l'utilisateur sur le fait que le cycle de cuisson est terminé.

Afin de permettre l'émission des premier et deuxième signaux 8, 9, le dispositif de gestion 7 de la cuisson comporte avantageusement un écran d'affichage 7A, formé par exemple par un écran électronique de type écran à cristaux liquides (écran LCD). Le dispositif de gestion 7 de la cuisson comprend également avantageusement un dispositif de génération de sons. Le dispositif de génération de son et l'écran 7A sont avantageusement tous deux alimentés électriquement par un système d'alimentation embarqué dans le dispositif de gestion 7, ledit système d'alimentation étant de préférence un système à piles, afin d'éviter de recourir à un branchement et conserver ainsi le caractère indépendant de l'appareil 1.

Dans une variante alternative, non illustrée aux figures, le premier signal 8 est destiné à commander la coupure de la source de chauffe. Dans ce cas, l'appareil 1 est relié fonctionnellement à la source de chauffe de sorte que le premier signal 8 commande directement la coupure de la source de chauffe, sans passer par l'utilisateur. Dans ce cas, il n'est pas nécessaire de prévenir l'utilisateur et le premier signal 8 peut dès lors n'être qu'un signal électrique de commande transmis à la source de chauffe, et non un signal d'information comme dans la variante précédemment décrite.

L'un des principes qui sous-tend l'invention consiste donc à couper la source de chauffe non pas en fin de cuisson, comme cela était pratiqué dans l'art antérieur, mais en cours de cuisson, de façon à ce qu'une partie de la cuisson s'effectue uniquement à l'aide de l'énergie emmagasinée sous forme de température (et avantageusement de pression) au sein de l'enceinte de cuisson, par un effet d'inertie, sans consommation d'énergie externe.

Plus précisément, en particulier dans le cas d'aliments relativement volumineux, cette seconde phase de cuisson, qui débute à partir du moment où la source de chauffe est coupée conformément à l'invitation signifiée à l'utilisateur par le premier signal 8, permet aux aliments de continuer à cuire à coeur grâce à la chaleur apportée par leurs couches superficielles déjà cuites, sans pour autant surcuire ces dernières puisque la source de chauffe est coupée, l'aliment étant simplement maintenu au chaud.

En définitive, l'invention réside donc dans la mise en oeuvre d'une première phase de cuisson avec la source de chauffe activée et réglée de préférence à sa puissance maximale, qui permet de cuire rapidement les couches extérieures des aliments et fait office d'accélérateur de cuisson, et d'une deuxième phase de cuisson douce, au cours de laquelle les aliments restent au sein de l'enceinte de cuisson (le couvercle 3 restant fermé sur la cuve 2), qui permet de cuire à coeur les aliments sans surcuire les couches superficielles de l'aliment et sans consommer d'énergie supplémentaire, du fait de l'extinction totale de la source de chauffe, qui n'est plus alimentée en énergie ou combustible.

La deuxième phase de cuisson, qui peut être qualifiée de phase de cuisson inertielle dans la mesure où elle ne nécessite pas d'apport d'énergie externe à la source de chauffe, permet ainsi de terminer le cycle de cuisson en douceur, le couvercle 3 restant de préférence verrouillé sur la cuve 2.

L'appareil de cuisson 1 conforme à l'invention permet ainsi à l'utilisateur de mettre en oeuvre de manière particulièrement simple, efficace et intuitive un tel procédé de cuisson séquentielle en invitant l'utilisateur à couper la source de chauffe à un moment prédéterminé, et en lui indiquant la fin de la cuisson à un autre moment prédéterminé ultérieur, une durée prédéterminée s'écoulant entre le premier signal 8 et le deuxième signal 9, en fonction de préférence de la nature des aliments à cuire. Grâce à cette durée prédéterminée, l'utilisateur est informé au plus tôt de la fin de la cuisson, ce qui permet de réduire le temps d'attente.

Avantageusement, le dispositif de gestion 7 de la cuisson est conçu pour émettre un troisième signal 10 destiné à inviter l'utilisateur à activer l'organe de décompression, afin de ramener la pression régnant dans l'enceinte de cuisson sensiblement à la pression atmosphérique.

Le troisième signal 10 présente avantageusement, tout comme les premier et deuxième signaux 8, 9, un caractère audiovisuel, étant entendu qu'il est cependant tout à fait envisageable qu'il puisse présenter uniquement un caractère sonore ou uniquement un caractère visuel. Ainsi, dans l'exemple illustré à la figure 8, le troisième signal 10 comprend une icône s'affichant sur l'écran 7A et symbolisant un jet de vapeur, afin de faire comprendre à l'utilisateur qu'il doit ramener l'organe de sélection de pression, qui commande également la décompression, en position de décompression. L'affichage de cette icône est accompagné de l'émission d'un son destiné à attirer l'attention de l'utilisateur.

De préférence, le dispositif de gestion 7 de la cuisson est conçu pour émettre les premier et troisième signaux 8, 10 sensiblement simultanément, comme illustré à la figure 8. Dans ce cas, l'utilisateur est invité au même moment à couper la source de chauffe et à activer l'organe de décompression de l'enceinte de cuisson, pour ramener l'intérieur de l'enceinte de cuisson, où sont placés les aliments, à pression atmosphérique. Ainsi, l'appareil 1 conforme à l'invention permet avantageusement de mettre en oeuvre une cuisson séquentielle à deux phases, savoir une phase de cuisson sous pression, pendant laquelle l'enceinte de cuisson est soumise à l'influence active d'une source de chauffe et est pressurisée, cette première phase de cuisson sous pression étant immédiatement suivie d'une phase de cuisson « *sans pression* », pendant laquelle la source de chauffe est coupée et l'enceinte de cuisson est mise en communication forcée avec l'extérieur pour être dépressurisée. Le début de cette deuxième phase de cuisson est marqué par l'émission des premier et troisième signaux 8, 10, tandis que la fin du cycle de cuisson est indiquée par le deuxième signal 9, qui informe l'utilisateur qu'il lui est possible d'ouvrir le couvercle 3 pour récupérer les aliments qui sont parfaitement cuits à coeur, sans surcuisson de leurs couches superficielles.

Il est bien entendu tout à fait envisageable que le troisième signal 10 soit émis après le premier signal 8, de façon à mettre en oeuvre successivement :
- une première phase de cuisson sous pression avec la source de chauffe allumée, et de préférence réglée à pleine puissance ;
- une deuxième phase de cuisson sous pression mais avec la source de chauffe coupée ;
- et enfin une troisième phase de cuisson sans pression et avec la source de chauffe coupée.

Il est cependant particulièrement avantageux, ne serait-ce que pour des raisons de simplicité d'utilisation, de faire coïncider la coupure de la source de chauffe et la décompression, de sorte que le cycle de cuisson ne comprenne finalement que deux phases distinctes.

Grâce à cette nouvelle gestion optimisée de la cuisson procurée par l'appareil 1 de cuisson conforme à l'invention, la décompression a lieu au cours du cycle de cuisson, et non à l'issue de ce dernier comme dans l'art antérieur. Ceci permet de terminer la cuisson avec une baisse progressive de pression, et donc de température, évitant les phénomènes de surcuisson des aliments. Ceci permet également une plus grande flexibilité d'usage, puisque lorsque le deuxième signal 9 informe l'utilisateur de la fin de la cuisson, les aliments ne sont pas soumis à des niveaux de pression et de température importants de sorte que même si l'utilisateur n'intervient pas immédiatement pour ouvrir le couvercle 3 et sortir les aliments hors de la cuve 2, les aliments cuits ne seront pas détériorés mais simplement maintenus au chaud sans surcuire. Au contraire, un tel oubli en fin de cuisson ne pardonnerait pas dans un autocuiseur traditionnel. En outre, la décompression fait désormais partie intégrante du cycle de cuisson, de sorte qu'avantageusement la décompression est terminée lorsqu'est émis le deuxième signal 9 signalant la fin de la cuisson. Ainsi, l'utilisateur peut immédiatement accéder aux aliments, sans avoir à attendre la décompression de l'appareil 1 puisque celle-ci a déjà eu lieu pendant le cycle de cuisson, et plus précisément pendant la deuxième phase de cuisson. Au contraire, dans l'art antérieur, l'utilisateur était contraint, une fois le temps de cuisson terminé, de procéder à une décompression de son appareil avant de pouvoir accéder aux aliments. Afin de limiter le temps d'attente, cette décompression était conçue pour être la plus rapide, et donc la plus violente possible, ce qui était source d'inquiétude pour l'utilisateur.

A l'inverse, avec l'appareil 1 de cuisson d'aliments conforme à l'invention, la décompression peut être réalisée avec un faible débit de fuite de vapeur, de manière à être lente et donc douce et non violente.

L'utilisateur n'est ainsi soumis à aucun phénomène anxiogène du genre dégagement brusque de vapeur comme dans l'art antérieur, et il n'a pas à attendre après la cuisson une décompression complète de l'appareil 1 puisque cette décompression s'est déroulée pendant la deuxième phase de cuisson, à partir de l'émission concomitante des premier et troisième signaux 8, 10 et jusqu'à l'émission du deuxième signal 9 marquant la fin de la cuisson.

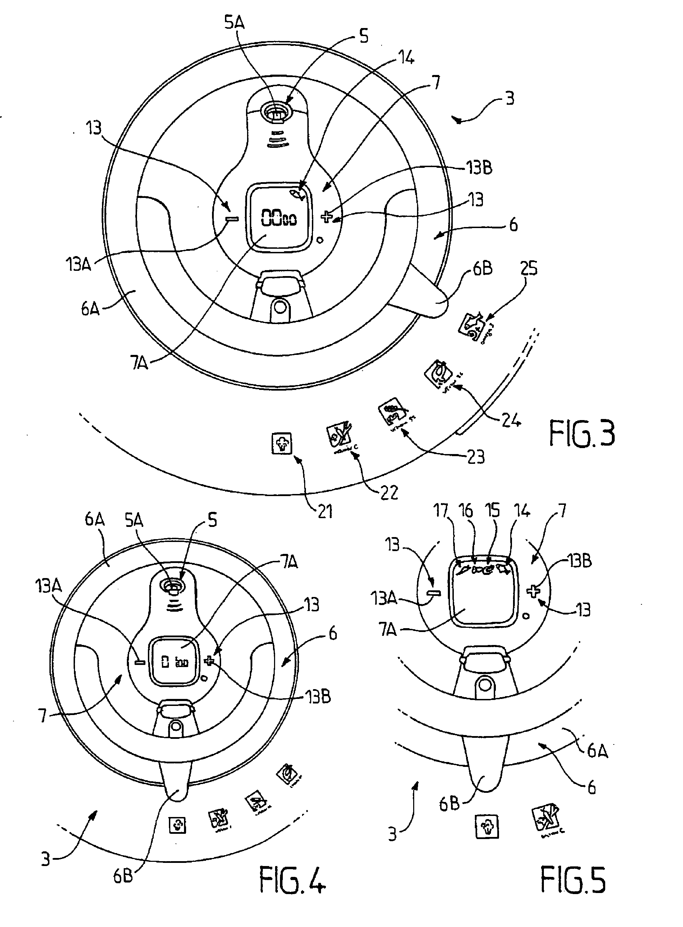

A titre alternatif, il est envisageable, sans pour autant que l'on sorte du cadre de l'invention, que le dispositif de gestion 7 de la cuisson soit conçu pour émettre un troisième signal 10 destiné à commander par lui-même l'activation de l'organe de décompression. Dans ce cas, le troisième signal 10 peut être simplement un signal électrique qui pilote, par tout moyen approprié, l'activation de l'organe de décompression en toute autonomie, sans que l'intervention de l'utilisateur ne soit requise. Dans ce cas, le procédé de cuisson peut être entièrement automatisé, ce qui facilite bien entendu l'utilisation de l'appareil 1 en limitant les interventions, et donc d'éventuelles erreurs de l'utilisateur. Afin de limiter de telles erreurs, il est cependant envisageable, dans le cadre de la variante illustrée aux figures où le troisième signal 10 invite l'utilisateur à activer l'organe de décompression, que l'organe de décompression soit relié au dispositif de gestion 7 de la cuisson pour que le dispositif de gestion 7 de la cuisson émette un signal de rappel 11 (cf. figure 5) si l'organe de décompression n'a pas été activé par l'utilisateur en dépit de l'invitation qui lui a été signifiée par le troisième signal 10.

Avantageusement, le dispositif de gestion 7 de la cuisson comprend un moyen de détection de l'atteinte d'une valeur prédéterminée de pression au sein de l'enceinte, ladite valeur prédéterminée correspondant de préférence à la valeur de consigne sélectionnée par l'utilisateur à l'aide de l'organe de sélection de pression 6.

En d'autres termes, le moyen de détection permet d'informer le dispositif de gestion 7 du début de la phase de cuisson sous pression régulée. Le moyen de détection dont est muni le dispositif de gestion 7 de la cuisson peut être de tout type connu de l'homme du métier. Il peut consister par exemple en un capteur de pression ou en un capteur de température, dans la mesure où la température régnant dans l'enceinte de cuisson est l'image de la pression régnant dans cette même enceinte. Avantageusement, le moyen de détection comprend un capteur de température disposé au niveau de la sortie de vapeur 5A, afin de détecter le premier jet de vapeur correspondant à l'ouverture de la soupape de régulation, ouverture qui signe l'atteinte de la valeur de consigne et donc le début de la phase de cuisson sous pression. En particulier, le capteur de température en question pourra être disposé conformément à l'enseignement du document FR-2 834 193 (FR-01 17101) dont le contenu est incorporé à la présente description. Avantageusement, le dispositif de gestion 7 de la cuisson est conçu pour émettre, lorsque l'atteinte de ladite valeur prédéterminée de pression est détectée par le moyen de détection, un quatrième signal qui est antérieur au premier signal 8 et qui est destiné à inviter l'utilisateur à diminuer la puissance de la source de chauffe, c'est-à-dire à ramener la puissance thermique émise par la source de chauffe à une valeur intermédiaire comprise entre la valeur maximale possible et une puissance nulle (correspondant à la coupure de la source de chauffe).

Ainsi, l'utilisateur est invité par le quatrième signal à réduire la puissance de la source de chauffe, ce qui ne signifie pas que la source de chauffe doit être complètement coupée.

Selon un mode de réalisation alternatif, le quatrième signal est destiné à commander la diminution de la puissance de la source de chauffe par lui-même, c'est-à-dire que dans ce cas le dispositif de gestion 7 de la cuisson est conçu pour directement agir sur la source de chauffe pour en diminuer la puissance, sans que l'intervention de l'utilisateur ne soit nécessaire. Le quatrième signal peut dans cette hypothèse être uniquement un signal électrique permettant de commander la diminution de la puissance de la source de chauffe, et il n'est pas nécessaire qu'il présente par ailleurs un caractère sonore et/ou visuel puisque l'intervention de l'utilisateur n'est pas requise dans ce cas.

Cependant, de façon préférentielle et comme illustré aux figures, les signaux 8, 9, 10 que le dispositif de gestion 7 de la cuisson est conçu pour émettre sont préférentiellement de nature sonore et/ou visuelle.

Par exemple, la source de chauffe pourra être réglée sur sa puissance maximale jusqu'à l'émission du quatrième signal, puis ramenée à environ la moitié, voire les deux-tiers, de sa puissance maximale à partir de l'émission du quatrième signal. Grâce à la mise en oeuvre d'une puissance maximale de chauffe au début du cycle de pression, avant l'émission du quatrième signal, la montée en pression se fait rapidement et la valeur de consigne est atteinte le plus rapidement possible. A partir du quatrième signal, une fois la valeur de consigne de pression atteinte, il suffit que le niveau de pression prédéterminé, correspondant à la valeur de consigne, soit maintenu dans l'enceinte de cuisson, ce qui ne nécessite pas que la source de chauffe soit réglée sur sa puissance maximale, un réglage correspondant à la moitié, voire le quart, de la puissance maximale étant souvent largement suffisant.

Comme indiqué précédemment, le quatrième signal est antérieur au premier signal 8, ce qui signifie que le dispositif de gestion 7 est conçu pour émettre le premier signal 8 après le quatrième signal, après qu'une durée prédéterminée se soit écoulée à partir du quatrième signal.

Avantageusement, l'appareil 1 conforme à l'invention comprend un moyen de paramétrage 13 permettant à l'utilisateur de régler au moins la durée s'écoulant entre le quatrième signal et le premier signal 8. Le moyen de paramétrage 13 est par exemple constitué d'un clavier comportant au moins deux boutons 13A, 13B permettant respectivement de décrémenter et d'incrémenter une valeur de temps qui s'affiche sur l'écran 7A et qui correspond à la durée s'écoulant entre l'émission du quatrième signal et celle du premier signal 8. Ainsi, dans ce mode de réalisation préférentiel, l'utilisateur peut programmer le dispositif de gestion 7 de la cuisson pour qu'une durée prédéterminée, choisie par l'utilisateur, s'écoule à partir de l'émission du quatrième signal jusqu'à celle du premier signal 8.

En d'autres termes, l'utilisateur peut grâce à cette caractéristique technique, choisir la durée de la phase de cuisson sous pression régulée, comme cela était d'ailleurs déjà possible dans l'art antérieur.

Avantageusement, le dispositif de gestion 7 de la cuisson comprend également un moyen de traitement relié à l'organe de sélection de pression 6 pour régler automatiquement la durée s'écoulant entre le premier signal 8 et le deuxième signal 9 en fonction de la valeur de consigne sélectionnée par l'utilisateur à l'aide de l'organe de sélection de pression 6. En d'autres termes, alors que la durée s'écoulant entre le quatrième signal et le premier signal est avantageusement réglée par l'utilisateur, en fonction par exemple de la nature et de la quantité des aliments à cuire, la durée s'écoulant entre le premier signal 8 et le deuxième 9 est quant à elle déterminée automatiquement par le dispositif de gestion 7 de la cuisson.

La durée s'écoulant entre les premier et deuxième signaux 8, 9 est avantageusement effectuée par le dispositif de gestion 7 de la cuisson en fonction de la position de l'organe de sélection de pression 6, à laquelle correspond une valeur de consigne donnée, ladite valeur de consigne étant elle-même optimisée pour un type d'aliment donné. Ainsi, la durée s'écoulant entre le premier et le deuxième signal 8, 9 peut être paramétrée en fonction de la nature de l'aliment à cuire, nature que le dispositif de gestion 7 connait indirectement grâce à la position de l'organe de sélection de pression 6, position qui correspond à une valeur de consigne elle-même optimisée pour l'aliment donné. Il est cependant tout à fait envisageable que le dispositif de gestion 7 de la cuisson prenne en compte d'autres paramètres pour fixer la durée prédéterminée s'écoulant entre le premier et le deuxième signal 8, 9. Par exemple, le dispositif de gestion 7 de la cuisson pourrait prendre en compte la durée qui s'est écoulée entre l'émission du quatrième signal et celle du premier signal 8, c'est-à-dire la durée de la première phase de cuisson sous pression. La masse des aliments à cuire, auxquels le dispositif de gestion 7 pourrait accéder par l'intermédiaire d'un capteur approprié, pourrait également être prise en compte pour le réglage automatique de la durée s'écoulant entre le premier signal 8 et le deuxième signal 9.

Inversement, il est tout à fait envisageable, sans pour autant que l'on sorte du cadre de l'invention, que le dispositif de gestion 7 de la cuisson soit conçu pour qu'une durée prédéterminée fixe, qui ne dépend d'aucun paramètre, s'écoule entre les premier et deuxième signaux 8, 9.

Ainsi, l'invention permet de mettre en oeuvre une première phase de cuisson sous pression régulée pendant une durée prédéterminée précise, qui correspond à la durée s'écoulant entre le quatrième signal et le premier signal 8, cette première phase de cuisson sous pression régulée étant suivie d'une deuxième phase de cuisson douce, avec la source de chauffe coupée ainsi que de préférence l'organe de décompression activé, cette deuxième phase de cuisson douce étant également mise en oeuvre pendant une durée prédéterminée, laquelle est préférentiellement fonction de la nature des aliments à cuire et/ou de la valeur de consigne sélectionnée par l'utilisateur à l'aide de l'organe de sélection de pression 6 pendant la première phase de cuisson. Cette deuxième phase de cuisson, qui débute à compter de l'émission du premier signal 8, s'effectue ainsi de manière contrôlée, pendant un temps parfaitement maîtrisé grâce au chronométrage effectué par le dispositif de gestion 7.

L'invention concerne par ailleurs en tant que tel un système de cuisson d'aliments comprenant d'une part un appareil de cuisson 1 conforme à la description qui précède et d'autre part un livret de recettes indiquant, pour au moins un aliment, une durée de cuisson, ladite durée de cuisson indiquée sur le livret de recettes en question correspondant à la durée s'écoulant entre le quatrième signal et le premier signal 8. En d'autres termes, le livret de recettes indique, pour un aliment donné (éventuellement en fonction de la masse à cuire), un temps de cuisson qui est destiné à être saisi par l'utilisateur grâce au moyen de paramétrage 13, ce temps de cuisson correspondant à la durée s'écoulant entre l'émission du quatrième signal et celle du premier signal 8. Le recours à un livret en tant que support physique d'informations est particulièrement intéressant du fait de sa simplicité et de son caractère bon marché.

Bien entendu, la durée de cuisson indiquée dans le livret tient compte du fait qu'à l'issue de la phase de cuisson sous pression a lieu une phase de cuisson « sans *pression* ». Par conséquent, la durée de cuisson indiquée dans le livret est inférieure à celle indiquée dans les livrets de recettes de l'art antérieur, ces derniers ne prévoyant qu'une seule opération de cuisson sous pression, sans opération successive de cuisson douce pendant une durée prédéterminée.

Le fonctionnement de l'appareil de cuisson 1 illustré aux figures va maintenant être décrit.

Dans un premier temps, l'utilisateur introduit les aliments à cuire, constitués par exemple par une pièce de poisson, à l'intérieur de la cuve 2. L'utilisateur rapporte ensuite le couvercle 3 sur la cuve 2 et verrouille ledit couvercle 3 sur la cuve 2, de façon à former une enceinte de cuisson sensiblement étanche, capable de monter en pression. A cet instant, l'organe de sélection de pression 6 est en position d'ouverture, comme illustré à la figure 2, c'est-à-dire que l'organe de décompression est activé, l'enceinte de cuisson étant donc en communication avec l'extérieur et ne pouvant de ce fait monter en pression. Le dispositif de gestion 7 de la cuisson est quant à lui inactivé, son écran 7A étant de ce fait vierge de toute indication. L'utilisateur va alors procéder à la programmation du temps de cuisson, c'est-à-dire qu'il va régler la durée de cuisson sous pression et lancer cette même phase de cuisson sous pression.

A cette fin, l'utilisateur peut procéder de deux façons.

Selon une première manière, illustrée à la figure 3, l'utilisateur déplace l'organe de sélection de pression 6 pour sélectionner une position de cuisson correspondant à l'aliment qu'il souhaite cuire, constitué en l'espèce par une pièce de poisson.

Le doigt 6B est donc entraîné manuellement en rotation par l'utilisateur pour être positionné en regard de l'icône 25 symbolisant un poisson, dessinée sur le couvercle 3 et correspondant à la quatrième position de cuisson, c'est-à-dire à une quatrième valeur de consigne prédéterminée. Le déplacement de l'organe de sélection de pression 6 de sa position ouverte (de décompression) à l'une de ses positions de cuisson, et en l'occurrence à sa quatrième position de cuisson, envoie un signal d'activation au dispositif de gestion 7 de la cuisson qui entraîne l'allumage de l'écran 7A, ce dernier affichant alors d'une part une image 14 symbolisant la position de cuisson sélectionnée par l'utilisateur (en l'espèce, l'image 14 représente un poisson), et d'autre part affichant quatre zéros, de préférence de façon clignotante, pour inviter l'utilisateur à programmer un temps de cuisson à l'aide des boutons 13A, 13B.

Selon un mode d'utilisation alternatif, illustré à la figure 4, l'utilisateur peut laisser l'organe de sélection de pression 6 en position d'ouverture, et appuyer directement sur les boutons 13A, 13B ce qui aura pour conséquence d'activer l'écran 7A et de permettre à l'utilisateur de saisir son temps de cuisson. Dans ce mode de cuisson alternatif, l'utilisateur devra bien entendu penser à sélectionner ensuite une position de cuisson. Si, au bout d'un temps prédéterminé, l'utilisateur a saisi un temps de cuisson à l'aide des boutons 13A, 13B mais n'a pas déplacé le doigt 6B vers une position de cuisson, alors un message d'erreur s'affiche, comme illustré à la figure 5, pour rappeler à l'utilisateur de sélectionner une position de cuisson. Ce message d'erreur peut par exemple consister en l'émission d'un son d'alerte couplé à l'affichage simultané, de préférence clignotant, de quatre symboles 14, 15, 16, 17 correspondant respectivement aux quatre positions de cuisson susceptibles d'être sélectionnées (en l'espèce, le symbole 14 représente un poisson, le symbole 15 un poulet, le symbole 16 des pommes de terre et le symbole 17 une carotte).

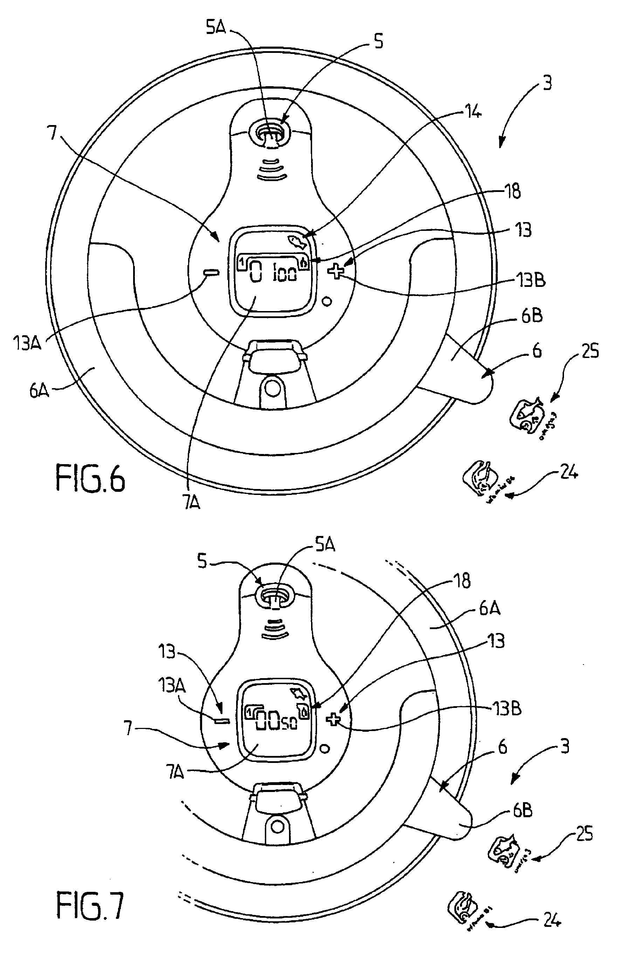

Une fois qu'une position de cuisson est sélectionnée, et qu'un temps de cuisson est programmé par l'utilisateur, l'écran 7A affiche, comme illustré par la figure 6 :
- le temps de cuisson programmé par l'utilisateur,
- une image 14 rappelant la position de cuisson sélectionnée,
- le chiffre « *1* » signifiant que la durée de cuisson programmée correspond à la durée d'une première phase de cuisson sous pression,
- et un symbole 18 rappelant à l'utilisateur que pendant cette première phase de cuisson, la source de chauffe doit être en fonctionnement.

L'enceinte de cuisson contenant les aliments est alors déposée sur une plaque de cuisson qui est mise en route à puissance maximale par l'utilisateur.

Dès que la pression régnant dans l'enceinte de cuisson atteint la valeur de consigne, le dispositif de gestion 7 émet le quatrième signal, par exemple sous la forme d'un son, pour inviter l'utilisateur à réduire la puissance de la source de chauffe, mais sans couper cette dernière (comme le lui rappelle l'image 18). Simultanément, le dispositif de gestion 7 de la cuisson enclenche le décompte du temps de cuisson qui a été programmé par l'utilisateur. Cette durée de cuisson programmée par l'utilisateur a été procurée à ce dernier par le livret de recettes.

Une fois la durée de cuisson programmée par l'utilisateur intégralement décomptée, l'écran 7A affiche quatre zéros (pour zéro minute et zéro seconde) et émet simultanément le premier signal 8 et le troisième signal 10 invitant respectivement l'utilisateur à couper la source de chauffe et à activer l'organe de décompression. Le premier signal 8 est par exemple constitué par l'image d'une flamme barrée, tandis que le troisième signal 10 représente un nuage de vapeur symbolisant la décompression. Ces images, affichées sur l'écran 7A, sont préférentiellement accompagnées d'un son attirant l'attention de l'utilisateur.

L'utilisateur ramène alors l'organe de sélection de pression 6 en position d'ouverture, ce qui entraîne la décompression de l'enceinte de cuisson. Commence alors une deuxième phase de cuisson, dont la mise en oeuvre est rappelée sur l'écran 7A par l'affichage du chiffre « 2 » et d'une flamme barrée d'une croix. L'écran 7A affiche également le décompte d'une durée prédéterminée qui est celle de cette deuxième phase de cuisson. Une image 19 symbolisant un autocuiseur fermé est également affichée sur l'écran 7A, pour rappeler à l'utilisateur qu'il ne doit pas à ce stade ouvrir le couvercle 3. La durée qui est décomptée à ce moment par le dispositif de gestion 7, décompte qui est affiché par l'écran 7A, a été déterminée automatiquement par le moyen de traitement du dispositif de gestion 7 en fonction de la position qu'occupait l'organe de sélection de pression 6 pendant la première phase de cuisson, illustrée aux figures 7 et 8.

Une fois que le décompte de la durée de la deuxième phase de cuisson arrive à son terme, l'écran 7A affiche quatre zéros, pour signifier la fin du décompte, et émet le deuxième signal 9, sous la forme par exemple d'une image affichée sur l'écran 7A symbolisant un autocuiseur dont le couvercle est ouvert, pour indiquer à l'utilisateur que la cuisson est intégralement terminée et qu'il peut accéder aux aliments.

Grâce à ce procédé de cuisson séquentielle précisément contrôlé, avec deux phases de cuisson différentes mises en oeuvre sur des durées précises, les aliments ne souffrent d'aucun phénomène de surcuisson et sont particulièrement tendres.

Ce principe de cuisson séquentielle permet également de préserver de façon optimale les vitamines au sein des aliments.

En outre, l'organe de décompression est avantageusement conçu pour que la décompression soit la plus lente, et donc la plus douce possible, sans toutefois que la durée de décompression complète n'excède la durée de la deuxième phase de cuisson (durée s'écoulant entre l'émission du premier signal 8 et celle du deuxième signal 9). Ainsi, lorsque le deuxième signal 9 est émis, l'utilisateur peut directement ouvrir le couvercle 3, puisque l'appareil a été ramené sensiblement à la pression atmosphérique pendant la deuxième phase de cuisson « *sans pression* ».

L'invention concerne par ailleurs en tant que tel un procédé de cuisson d'aliments par soumission de ces derniers à une source de chauffe, ledit procédé étant susceptible d'être mis en oeuvre par l'appareil décrit dans ce qui précède et comprenant :
- une première phase de cuisson au cours de laquelle les aliments sont disposés au sein d'une enceinte soumise à une source de chauffe et au sein de laquelle règne une pression maintenue sensiblement constante à une valeur prédéterminée sensiblement supérieure à la pression atmosphérique,
- une deuxième phase de cuisson au cours de laquelle la source de chauffe est coupée et la valeur de la pression régnant dans l'enceinte est progressivement réduite jusqu'à atteindre sensiblement la valeur de la pression atmosphérique,
- et une étape de détermination de la durée de la deuxième phase de cuisson, de façon que la deuxième phase de cuisson soit mise en oeuvre pendant une durée prédéterminée.

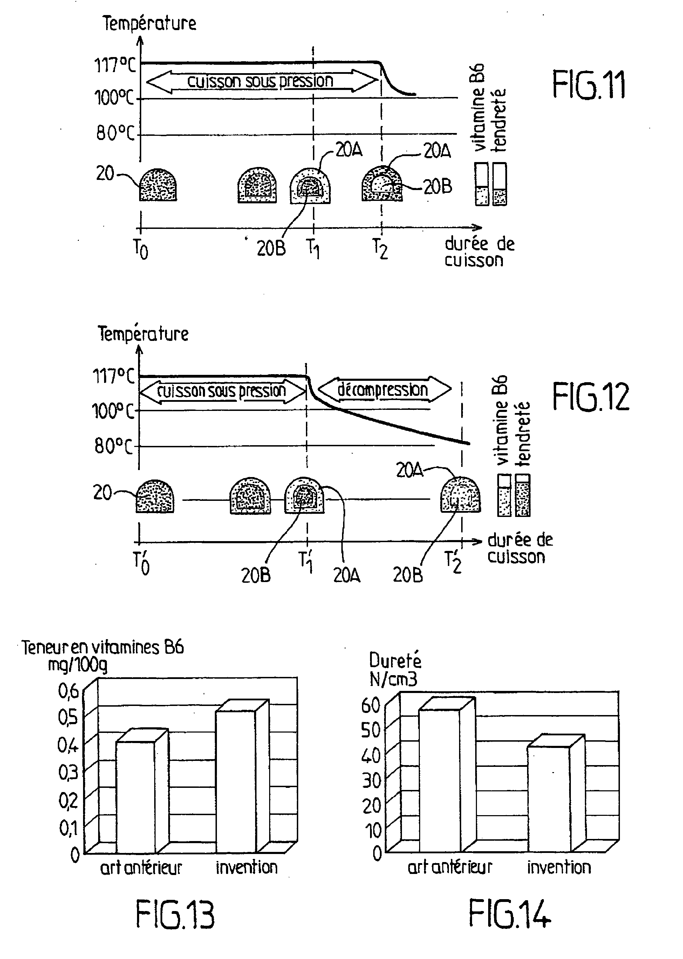

Avantageusement, la durée de la deuxième phase de cuisson est déterminée, au cours de ladite étape de détermination précitée, en fonction de la nature des aliments à cuire. Dans ce cas, le procédé conforme à l'invention comprend ainsi une étape de détermination de la durée de la deuxième phase de cuisson en fonction de la nature des aliments à cuire, de telle sorte que la deuxième phase de cuisson est mise en oeuvre pendant une durée prédéterminée calculée en fonction de la nature des aliments à cuire. De façon avantageuse, la détermination de la durée de la deuxième phase de cuisson est effectuée en tenant compte de la position de l'organe de sélection de pression, à laquelle correspond une valeur de consigne prédéterminée qui renseigne indirectement sur la nature des aliments à cuire. La deuxième phase de cuisson se déroule ainsi pendant une durée prédéterminée, qui est de préférence suffisante pour que la pression au sein de l'enceinte soit revenue sensiblement au niveau de la pression atmosphérique. Les graphes des figures 11 et 12 résument le principe de cuisson conforme à l'invention (figure 12) en comparaison avec une cuisson conforme à l'art antérieur (figure 11). Ce principe est appliqué en l'espèce à une tranche de rôti de porc 20 d'une masse de 130 g placée dans un autocuiseur 1 pour y être cuite. La tranche de rôti de porc 20 est initialement crue. Dans l'art antérieur, comme illustré à la figure 11, cette tranche de rôti de porc 20 est soumise à une phase de cuisson sous pression, par exemple à une pression régulée de 85 kPa, entre un instant T₀ marquant le début de la cuisson sous pression et un instant T₂ marquant la fin de la cuisson sous pression. Comme illustré sur la figure 11, les couches superficielles 20A de la tranche de rôti 20 sont bien cuites à un instant T₁ qui est antérieur à l'instant T₂.

En revanche, à cet instant T₁, le coeur 20B de la tranche de rôti de porc 20 n'est pas encore bien cuit, la température dudit coeur 20B n'ayant pas atteint le seuil de 75°C à partir duquel l'hémoglobine, et donc la couleur rose de la viande, disparaît. La cuisson est donc poursuivie jusqu'à l'instant final T₂ où le coeur 20B est cette fois correctement cuit. En revanche, les couches superficielles 20A ont subi une surcuisson entre les instants T₁ et T₂. A compter de l'instant T₂, l'appareil de cuisson est mis en décompression par l'utilisateur de façon brusque et incontrôlée pour pouvoir accéder aux aliments le plus vite possible.

En revanche, dans le procédé de cuisson conforme à l'invention illustré à la figure 12, la tranche de rôti de porc 20 subit une première phase de cuisson sous pression pendant une durée prédéterminée entre un instant initial T'₀ et un instant intermédiaire T'₁. Au moment de l'instant intermédiaire T'₁, les couches superficielles 20A de la tranche de rôti 20 sont bien cuites, tandis que le coeur 20B de la tranche 20 n'est pas encore suffisamment cuit. A compter de l'instant T'₁ débute la deuxième phase de cuisson pendant laquelle la source de chauffe est coupée et l'organe de décompression activée, la décompression se faisant de manière progressive pendant toute la durée de cette deuxième phase de cuisson qui s'étend jusqu'à un instant final T'₂. Grâce au caractère doux de cette deuxième phase de cuisson, qui est mise en oeuvre entre les instants T'₁ et T'₂, le coeur 20B de la tranche de rôti 20 est correctement cuit à l'instant T'₂, de même que les couches superficielles 20A de cette même tranche 20 qui n'ont pas subi de surcuisson du fait du caractère faiblement énergétique de la deuxième phase de cuisson. Comme illustré à la figure 12, la décompression est effectuée de manière progressive pendant tout ou partie de la deuxième phase de cuisson, entre les instants T'₁ et T'₂, de sorte qu'à l'instant T'₂ l'utilisateur peut immédiatement accéder à la tranche de rôti qui est parfaitement et uniformément cuite.

Ce mode de cuisson permet ainsi d'améliorer la tendreté de la tranche de rôti 20 et de préserver sa teneur en vitamines B6, comme illustré aux figures 13 et 14. Ainsi, le graphe de la figure 13 montre que l'appareil 1 et le procédé de cuisson conformes à l'invention permettent de préserver jusqu'à 25 % de vitamines B6 par rapport à un mode de cuisson classique dans un autocuiseur classique. Cette préservation des vitamines B6 s'avère particulièrement importante dans la mesure où les vitamines B6 ont un effet bénéfique pour le métabolisme des acides aminés, dans la synthèse des anticorps, et de manière générale pour le système immunitaire.

La figure 14 montre quant à elle une diminution de la dureté de la viande, et donc une augmentation de la tendreté de la viande, ce qui est un critère organoleptique primordial pour une cuisson de viande. L'appareil 1 et le procédé correspondant conformes à l'invention permettent ainsi un gain de l'ordre de 25 % en matière de tendreté par rapport à une cuisson classique dans un autocuiseur classique.

## Revendications

1. Appareil (1) de cuisson d'aliments par soumission de ces derniers à une source de chauffe, ledit appareil (1) étant **caractérisé en ce qu'**il comporte un dispositif de gestion (7) de la cuisson conçu pour émettre d'une part un premier signal (8) destiné soit à commander la coupure de la source de chauffe soit à inviter l'utilisateur à couper la source de chauffe et d'autre part un deuxième signal (9) qui est postérieur audit premier signal (8) et qui indique à l'utilisateur la fin de la cuisson.

2. Appareil (1) selon la revendication 1 **caractérisé en ce qu'**il est conçu pour former une enceinte de cuisson permettant la cuisson sous pression desdits aliments et **en ce qu'**il comprend un organe de décompression de ladite enceinte de cuisson, ledit dispositif de gestion (7) de la cuisson étant conçu pour émettre un troisième signal (10) destiné soit à commander l'activation de l'organe de décompression soit à inviter l'utilisateur à activer ledit organe de décompression.

3. Appareil (1) selon la revendication 2 **caractérisé en ce que** l'organe de décompression est relié au dispositif de gestion (7) de la cuisson pour que le dispositif de gestion (7) de la cuisson émette un signal de rappel si l'organe de décompression n'a pas été activé par l'utilisateur en dépit de l'invitation qui lui a été signifiée par le troisième signal (10).

4. Appareil (1) selon la revendication 2 ou 3 **caractérisé en ce que** le dispositif de gestion (7) de la cuisson est conçu pour émettre lesdits premier et troisième signaux (8, 10) sensiblement simultanément.

5. Appareil (1) selon l'une des revendications 2 à 4 **caractérisé en ce que** le dispositif de gestion (7) de la cuisson comprend un moyen de détection de l'atteinte d'une valeur prédéterminée de pression au sein de l'enceinte, ledit dispositif de gestion (7) de la cuisson étant conçu pour émettre, lorsque l'atteinte de ladite valeur prédéterminée est détectée, un quatrième signal qui est antérieur au premier signal (8) et qui est destiné soit à commander la diminution de la puissance de la source de chauffe soit à inviter l'utilisateur à diminuer la puissance de la source de chauffe.

6. Appareil (1) selon la revendication 5 **caractérisé en ce que** qu'il comprend un moyen de paramétrage (13) permettant à l'utilisateur de régler au moins la durée s'écoulant entre le quatrième signal et le premier signal (8).

7. Appareil (1) selon l'une des revendications 2 à 6 **caractérisé en ce qu'**il comprend :
- un moyen de régulation (5) de la valeur de la pression régnant dans l'enceinte de cuisson pour maintenir ladite pression à une valeur de consigne,
- un organe de sélection de pression (6) permettant à l'utilisateur de régler ladite valeur de consigne,
ledit dispositif de gestion (7) de la cuisson comprenant un moyen de traitement relié à l'organe de sélection de pression (6) pour régler automatiquement la durée s'écoulant entre le premier et le deuxième signal (8, 9) en fonction de ladite valeur de consigne.

8. Appareil (1) selon l'une des revendications 1 à 7 **caractérisé en ce que** les signaux (8, 9, 10) que ledit dispositif de gestion (7) de la cuisson est conçu pour émettre sont de nature sonore et/ou visuelle.

9. Système de cuisson d'aliments comprenant d'une part un appareil de cuisson (1) conforme à la revendication 6 et d'autre part un livret de recettes indiquant, pour au moins un aliment, une durée de cuisson, ladite durée de cuisson indiquée sur le livret de recettes correspondant à la durée s'écoulant entre le quatrième signal et le premier signal (8).

10. Procédé de cuisson d'aliments par soumission de ces derniers à une source de chauffe, ledit procédé comprenant une première phase de cuisson au cours de laquelle les aliments sont disposés au sein d'une enceinte soumise à une source de chauffe et au sein de laquelle règne une pression maintenue sensiblement constante à une valeur prédéterminée sensiblement supérieure à la pression atmosphérique, ledit procédé étant **caractérisé en ce qu'**il comprend :
- une deuxième phase de cuisson au cours de laquelle la source de chauffe est coupée et la valeur de la pression régnant dans l'enceinte est progressivement réduite jusqu'à atteindre sensiblement la valeur de la pression atmosphérique,
- et une étape de détermination de la durée de la deuxième phase de cuisson, de façon que la deuxième phase de cuisson soit mise en oeuvre pendant une durée prédéterminée.

## Patentansprüche

1. Gerät (1) zum Garen von Nahrungsmitteln durch Aussetzen derselben einer Heizquelle, wobei das Gerät (1) **dadurch gekennzeichnet ist, dass** es eine Gar-Steuerungsvorrichtung (7) aufweist, die ausgelegt ist, um einerseits ein erstes Signal (8) auszugeben, das entweder dazu bestimmt ist, das Abschalten der Heizquelle zu steuern oder den Benutzer zum Abschalten der Heizquelle aufzufordern, und andererseits ein zweites Signal (9) auszugeben, das auf das erste Signal (8) folgt und dem Benutzer das Ende des Garens anzeigt.

2. Gerät (1) nach Anspruch 1, **dadurch gekennzeichnet, dass** es ausgelegt ist, um einen Garraum zu bilden, der das Garen der Nahrungsmittel unter Druck erlaubt, und dass es ein Druckablassorgan des Garraumes aufweist, wobei die Gar-Steuerungsvorrichtung (7) ausgelegt ist, um ein drittes Signal (10) auszugeben, das entweder dazu bestimmt ist, das Aktivieren des Druckablassorgans zu steuern, oder dazu, den Benutzer zum Aktivieren des Druckablassorgans aufzufordern.

3. Gerät (1) nach Anspruch 2, **dadurch gekennzeichnet, dass** das Druckablassorgan mit der Gar-Steuerungsvorrichtung (7) verbunden ist, damit die Gar-Steuerungsvorrichtung (7) ein Erinnerungssignal ausgibt, wenn das Druckablassorgan vom Benutzer trotz der Aufforderung, die ihm durch das dritte Signal (10) gemeldet wurde, nicht aktiviert wurde.

4. Gerät (1) nach Anspruch 2 oder 3, **dadurch gekennzeichnet, dass** die Gar-Steuerungsvorrichtung (7) ausgelegt ist, um das erste und das dritte Signal (8, 10) im Wesentlichen gleichzeitig abzugeben.

5. Gerät (1) nach einem der Ansprüche 2 bis 4, **dadurch gekennzeichnet, dass** die Gar-Steuerungsvorrichtung (7) ein Mittel zum Erfassen des Erreichens eines vorbestimmten Druckwerts innerhalb des Raumes aufweist, wobei die Gar-Steuerungsvorrichtung (7) ausgelegt ist, um, wenn das Erreichen des vorbestimmten Werts erfasst wird, ein viertes Signal auszugeben, das dem ersten Signal (8) vorausgeht, und dazu bestimmt ist, entweder das Verringern der Leistung der Heizquelle zu steuern, oder den Benutzer dazu aufzufordern, die Leistung der Heizquelle, zu verringern.

6. Gerät (1) nach Anspruch 5, **dadurch gekennzeichnet, dass** es ein Parametrierungsmittel (13) aufweist, das es dem Benutzer erlaubt, mindestens den Zeitraum einzustellen, der zwischen dem vierten Signal und dem ersten Signal (8) verstreicht.

7. Gerät (1) nach einem der Ansprüche 2 bis 6, **dadurch gekennzeichnet, dass** es Folgendes aufweist:
- ein Mittel (5) zum Einstellen des Druckwerts, der in dem Garraum herrscht, um den Druck auf einem Sollwert zu halten,
- ein Druckauswahlorgan (6), das es dem Benutzer erlaubt, den Sollwert einzustellen,
wobei die Gar-Steuerungsvorrichtung (7) ein Verarbeitungsmittel aufweist, das mit dem Druckauswahlorgan (6) verbunden ist, um automatisch den Zeitraum, der zwischen dem ersten und dem zweiten Signal (8, 9) verstreicht, in Abhängigkeit von dem Sollwert einzustellen.

8. Gerät (1) nach einem der Ansprüche 1 bis 7, **dadurch gekennzeichnet, dass** die Signale (8, 9, 10), zu deren Ausgeben die Gar-Steuerungsvorrichtung (7) ausgelegt ist, akustisch und/oder visuell sind.

9. System zum Garen von Nahrungsmitteln, das einerseits ein Gargerät (1) aufweist, das Anspruch 6 entspricht, und andererseits ein Rezeptheft, das für mindestens ein Nahrungsmittel eine Garzeit angibt, wobei die Garzeit, die in dem Rezeptheft angegeben ist, dem Zeitraum entspricht, der zwischen dem vierten Signal und dem ersten Signal (8) verstreicht.

10. Verfahren zum Garen von Nahrungsmitteln durch Aussetzen derselben einer Heizquelle, wobei das Verfahren eine erste Garphase aufweist, in deren Verlauf die Nahrungsmittel innerhalb eines Raumes angeordnet sind, der einer Heizquelle unterworfen wird und in dem ein Druck herrscht, der im Wesentlichen konstant auf einem vorbestimmten Wert gehalten wird, der im Wesentlichen größer ist als der Luftdruck, wobei das Verfahren **dadurch gekennzeichnet ist, dass** es Folgendes aufweist:
- eine zweite Garphase, in deren Verlauf die Heizquelle abgeschaltet wird und der Wert des Drucks, der in dem Raum herrscht, allmählich verringert wird, bis er im Wesentlichen den Wert des Luftdrucks erreicht,
- und einen Schritt des Bestimmens des Zeitraums der zweiten Garphase derart, dass die zweite Garphase während eines vorbestimmten Zeitraums umgesetzt wird.

## Claims

1. A utensil (1) for cooking food by subjecting said food to a heat source, said utensil (1) being **characterized in that** it is provided with a cooking management device (7) that is designed to emit firstly a first signal (8) either for causing the heat source to be switched off or for urging the user to switch off the heat source, and secondly a second signal (9) subsequent to the first signal (8) and that indicates to the user that cooking is finished.

2. A utensil (1) according to claim 1, **characterized in that** it is designed to form a cooking enclosure making it possible to cook said food under pressure, and **in that** it is provided with a decompression member for said cooking enclosure, said cooking management device (7) being designed to emit a third signal (10) either for causing the decompression member to be activated or for urging the user to activate said decompression member.

3. A utensil (1) according to claim 2, **characterized in that** the decompression member is connected to the cooking management device (7) so that the cooking management device (7) emits a reminder signal if the decompression member has not been activated by the user in spite of the third signal (10) urging said user to do so.

4. A utensil (1) according to claim 2 to 3, **characterized in that** the cooking management device (7) is designed to emit said first and third signals (8, 10) substantially simultaneously.

5. A utensil (1) according to any one of claims 2 to 4, **characterized in that** the cooking management device (7) is provided with detector means for detecting that a predetermined pressure value has been reached in the enclosure, said cooking management device (7) being designed so that, when said predetermined pressure value is detected, said cooking management device emits a fourth signal that is prior to the first signal (8) and that is designed either to cause the power of the heat source to be reduced, or to urge the user to reduce the power of the heat source.

6. A utensil (1) according to claim 5, **characterized in that** it is provided with setting means (13) enabling the user to set at least the time that elapses between the fourth signal and the first signal (8).

7. A utensil (1) according to any one of claims 2 to 6, **characterized in that** it is provided with:
- regulator means (5) for regulating the pressure value prevailing in the cooking enclosure so as to maintain said pressure at a setpoint pressure; and with
- a pressure selector member (6) enabling the user to set said setpoint value;
said cooking management device (7) being provided with processor means connected to the pressure selector member (6) so as automatically to set the time elapsing between the first and the second signals (8, 9) as a function of said setpoint value.

8. A utensil (1) according to any one of claims 1 to 7, **characterized in that** the signals (8, 9, 10) that said cooking management device (7) is designed to emit are of audible and/or visible nature.

9. A food-cooking system comprising firstly a cooking utensil (1) according to claim 6, and secondly a recipe booklet indicating a cooking time for at least one food, said cooking time indicated in the recipe booklet corresponding to the time elapsing between the fourth signal and the first signal (8).

10. A method of cooking food by subjecting said food to a heat source, said method comprising a first cooking stage during which the food is disposed in an enclosure subjected to a heat source and in which a pressure prevails that is maintained substantially constant at a predetermined value that is significantly greater than atmospheric pressure, said method being **characterized in that** it comprises:
- a second cooking stage during which the heat source is switched off and the pressure value prevailing in the enclosure is progressively reduced to substantially the value of atmospheric pressure; and
- a determination step for determining the time of the second cooking stage so that the second cooking stage is implemented for a predetermined time.
